# FASCICULE DE BREVET EUROPEEN

(11) **EP 3 772 916 B1**
(45) Date de publication et mention de la délivrance du brevet: **22.06.2022**
(21) Numéro de dépôt: 19718905.3
(22) Date de dépôt: 22.03.2019
(51) Int. Cl.: A01K 1/015, A01K 31/18, A01K 31/04

(54) **ENSEMBLE MOBILE POUR AERER DE MANIERE AUTONOME UNE LITIERE RECOUVRANT LE SOL D'UN ESPACE CLOS**
BEWEGLICHE ANORDNUNG ZUR AUTONOMEN BELÜFTUNG EINER DEN BODEN EINES GESCHLOSSENEN RAUMES BEDECKENDEN STREU
MOVABLE ASSEMBLY FOR AUTONOMOUSLY AERATING A LITTER COVERING THE GROUND OF AN ENCLOSED SPACE

(30) Priorité: 26.03.2018 FR 1852610
(43) Date de publication de la demande: 17.02.2021
(73) Titulaire: Octopus Robots, 49300 Cholet (FR)
(72) Inventeur: SOMVILLE, Olivier, 49300 Cholet (FR)
(74) Mandataire: Fédit-Loriot
(86) Numéro de dépôt international: PCT/FR2019/050665
(87) Numéro de publication internationale: WO 2019/186038

(56) Documents cités:
- WO-A1-2017/102995
- WO-A1-2017/150967
- NL-B- 2 015 909
- US-A- 5 974 348
- US-A1- 2017 293 305

## Description

La présente invention se rapporte à un ensemble pour aérer une litière recouvrant le sol d'un enclos, ledit ensemble comprenant une base mobile apte à parcourir de manière autonome ledit enclos.

Dans le domaine de l'élevage animal, et notamment dans le domaine avicole, il est bien connu que l'entretien des litières installées sur les sols d'élevage représente un travail long et complexe, compte tenu notamment de la taille des enclos, de la présence des animaux et de l'étendue des surfaces à traiter. Cependant, l'entretien des litières dans les enclos d'élevage avicole est indispensable pour assurer aux animaux de bonnes conditions de vie.

Par conséquent, un problème connu consiste à automatiser le traitement des litières d'élevage animal.

On connaît des bases mobiles autonomes aptes à pulvériser des produits traitants de manière autonome dans des enclos d'élevage agricole, par exemple dans le domaine avicole, tel que la base mobile autonome décrite dans le document FR3047417 A1. Toutefois une telle solution ne permet pas d'assurer un entretien optimal des litières d'élevage. Le document US2017/0293305A1 divulgue un ensemble mobile pour aérer une litière selon le préambule de la revendication 1.

Aussi il existe le besoin d'une solution pour améliorer les dispositifs mobiles autonomes adaptés pour traiter les enclos d'élevage

On propose un ensemble mobile pour aérer une litière recouvrant le sol d'un enclos, selon la revendication 1, comprenant une base mobile motorisée apte à parcourir de manière autonome ledit enclos et un système de scarification comprenant un axe scarificateur sur lequel sont installées des lames de scarification, ledit axe scarificateur étant entraîné en rotation par des moyens d'entraînement motorisé, le système de scarification étant installé mobile en rotation par rapport à la base mobile, l'ensemble mobile comprenant :
- des moyens de mesure de la charge énergétique disponible pour l'ensemble mobile ;
- des moyens de mesure de l'assiette de la base mobile ; et
- un dispositif de contrôle du système de scarification apte à modifier la hauteur de l'axe scarificateur par rapport à la base mobile, de sorte à adapter la profondeur de pénétration des lames de scarification dans ladite litière en fonction d'au moins la charge énergétique disponible et de l'assiette mesurée de la base mobile.

Ainsi, l'invention permet d'aérer et de retourner les litières dans un enclos d'élevage avicole de manière autonome. Ainsi, on peut améliorer le fonctionnement des dispositifs mobiles autonomes adaptés pour traiter les enclos d'élevage en associant une action mécanique sur la litière en plus d'un traitement par pulvérisation de produit assainissant.

L'ensemble mobile selon l'invention permet en outre d'assurer un fonctionnement autonome efficace, par calcul de la hauteur du scarificateur en fonction de la charge énergétique disponible, par exemple la charge électrique dans le cas d'une base mobile électrique, et de protéger le scarificateur des imperfection de terrain fréquemment rencontrées dans le cadre d'enclos avicoles ou de toute autre enclos d'élevage industriel et/ou agricole.

Avantageusement et de manière non limitative, le système de scarification comprend des moyens de repos conformés pour maintenir les lames de scarification à distance du sol tout en permettant leur pénétration dans la litière. Ainsi on peut s'assurer qu'en tout circonstances les lames n'entrent pas en contact avec le sol, ce qui permet d'éviter des dommages involontaires sur les lames et des coûts d'entretien relativement importants.

Avantageusement et de manière non limitative, les moyens de repos comprennent deux disques installés chacun à une extrémité longitudinale de l'axe scarificateur et présentant un rayon sensiblement supérieur à la longueur de portée des lames de scarification installées sur l'axe scarificateur. Ainsi, les moyens de repos permettent d'assurer une bonne mobilité du système de scarification, tout en protégeant les lames du sol.

Avantageusement et de manière non limitative, l'axe scarificateur est monté à rotation sous un organe de protection, ledit organe de protection étant fixé à une platine support par un axe de rotation d'une part et par ledit dispositif de contrôle d'autre part. Ainsi, on peut assurer une fixation relativement efficace et sécurisée de l'axe scarificateur.

Avantageusement et de manière non limitative, le dispositif de contrôle comprend une machine électrique montée à rotation sur ladite platine support, une vis sans fin étant montée sur la machine électrique de sorte à être entraîné en rotation par la machine électrique, ladite vis sans fin coopérant avec un pignon fixe solidaire de l'organe de protection. Ainsi, on peut obtenir un dispositif de contrôle robuste, précis et peu coûteux.

L'invention concerne aussi un procédé de commande d'un ensemble mobile tel que décrit précédemment selon la revendication 6, comprenant :
- une étape de mesure de la charge énergétique disponible de l'ensemble mobile et de l'assiette de la base mobile;
- une étape de calcul d'un taux d'abaissement du système de scarification en fonction d'au moins lesdites mesures de charge énergétique disponible de la base mobile et de l'assiette de la base mobile;
- et une étape de commande du dispositif de contrôle adaptée pour modifier la hauteur de l'axe scarificateur par rapport à la base mobile jusqu'à atteindre le taux d'abaissement calculé, de sorte à adapter la profondeur de pénétration des lames de scarification dans ladite litière.

Ainsi, le procédé permet de tenir compte des spécificités d'un environnement d'une base mobile autonome dans un enclos avicole, ce qui permet d'assurer un traitement des litières relativement optimal.

Avantageusement et de manière non limitative, l'étape de calcul comprend le calcul d'un taux d'abaissement du système de scarification en fonction d'un taux standard d'abaissement prédéterminé. On peut ainsi obtenir une étape de calcul relativement simple tenant compte d'une valeur prédéterminée.

Avantageusement et de manière non limitative, l'étape de calcul comprend la réduction du taux standard d'abaissement de sorte à relever l'axe de scarification si la charge énergétique disponible l'ensemble mobile mesurée est inférieure à une valeur de seuil inférieur. Ainsi, on peut optimiser la consommation d'énergie, en particulier d'énergie électrique, de sorte à permettre à la base mobile de terminer ses autre traitements, en dégradant provisoirement l'effet de scarification, lorsque la charge électrique est faible.

Avantageusement et de manière non limitative, l'étape de calcul comprend la réduction du taux standard d'abaissement de sorte à relever l'axe de scarification lorsque l'assiette de la base mobile change. Ainsi, on peut protéger les lames de scarification des imperfections du sol en temps réel.

Avantageusement et de manière non limitative, l'étape de calcul comprend la réduction du taux standard d'abaissement lorsqu'un angle de progression de la base mobile indiquant un virage de la base mobile est mesuré. Ainsi, on peut remonter le système de scarification lorsque la base mobile procède à un virage, en particulier un virage important, tel qu'un demi-tour, de sorte à préserver la qualité et l'état de la litière au voisinage du lieu du demi-tour.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue en perspective d'un système de scarification selon un mode de réalisation de l'invention ;
- la figure 2 est une autre vue du système de scarification selon le mode de réalisation de la figure 1 ;

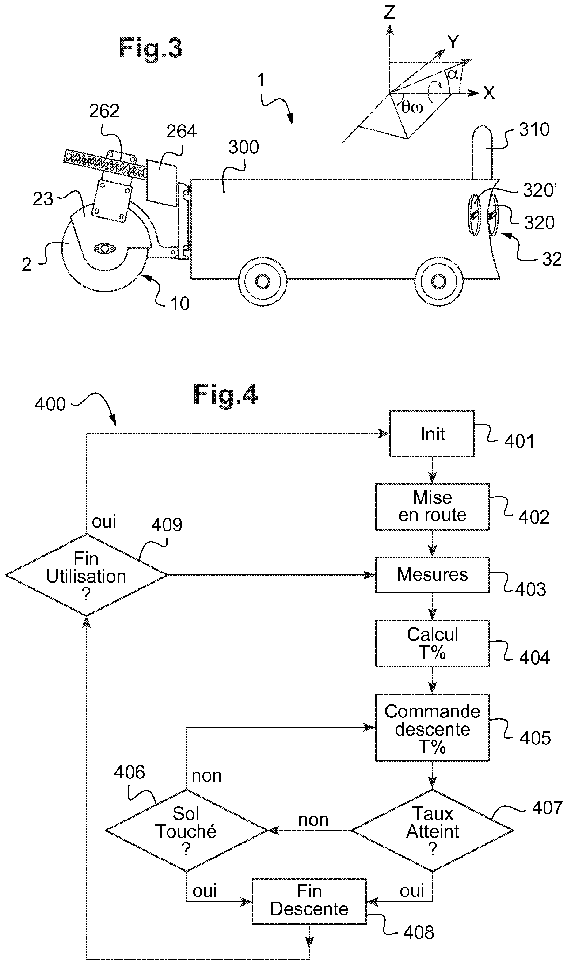

- la figure 3 est une vue schématique de côté d'un ensemble de scarification selon un mode de réalisation de l'invention ; et
- la figure 4 est un organigramme d'un procédé de commande du système de scarification selon un mode de réalisation de l'invention.

Un ensemble mobile 1 pour aérer une litière recouvrant le sol, généralement un sol bétonné ou en terre battue, d'un espace clos d'élevage avicole comprend une base mobile autonome 300, apte à parcourir de manière autonome un enclos d'élevage avicole et un système de scarification 10 traîné par la base mobile autonome 300.

On parle dans la présente description de litière, mais l'invention est adaptée pour aérer tout type de substrat pouvant être déposé en couche sur un sol.

Le base mobile autonome 300, aussi abrégé en base mobile 300, est un véhicule autonome motorisé par un moteur électrique alimenté par une batterie d'accumulateurs électrique ou des piles à combustibles. Toutefois l'invention ne se limite pas à ce type de motorisation, qui peut par exemple être aussi une motorisation thermique, par exemple par moteur à combustion interne.

On entend par le terme autonome le fait que la base mobile 300 est adaptée pour se déplacer dans un enclos d'élevage, en présence d'animaux, en l'absence d'intervention humaine en temps réel, par exemple en l'absence de conducteur. Autrement dit, un déplacement autonome est un déplacement résultant de la réalisation automatique d'une cartographie de l'enclos, par capture de données issues d'un organe de télédétection par laser 310 (mieux connu sous son acronyme anglais *lidar 310)*, et par des caméra de détection 320,320', 320", ici trois caméra frontale, installées à l'avant de la base mobile autonome apte à procéder à une reconstruction 3D de l'environnement frontal de la base mobile 300.

Le *lidar* frontal 310 est installé sur une portion avant de la base mobile 300.

Les moyens de cartographie de la base mobile 300 ne sont toutefois pas limités au lidar et aux caméras précédemment décrites.

Le déplacement autonome est ensuite réalisé par des prises de décisions en temps réel réalisées par un calculateur de bord et sans intervention humaine, de sorte à définir une trajectoire optimale pour parcourir l'enclos, contourner les obstacles, adapter l'allure et la trajectoire à l'environnement extérieur, notamment à la présence d'animaux, ou encore communiquer avec d'autres dispositifs mobiles autonomes.

La base mobile 2 comprend à cet effet des moyens de calcul d'itinéraire, ici un microcontrôleur, adapté pour déterminer le chemin à parcourir en fonction de données cartographiques réalisées.

Le système de scarification 10, aussi appelé scarificateur 10, comprend un dispositif de fixation 200, ici une platine de fixation 200 à la base mobile présentant quatre crochets 210-210"' adaptés pour s'engager sur des supports fixes, non représentées, de la base mobile 300.

Le système de scarification 10 comprend un axe scarificateur 2 sur lequel sont installées des lames de scarification 20-20", aussi appelées lames scarificatrices 20-20".

L'axe scarificateur 2 est installé sous un organe de protection 21 visant à prévenir la projection de litières et de matériaux entraînés par l'axe scarificateur 2 vers la base mobile 300.

L'axe scarificateur 2 est entraîné en rotation par une machine électrique 30.

La machine électrique 30 entraîne en rotation un arbre 31 s'étendant à l'opposé de l'organe de protection 21 par rapport à l'axe scarificateur 2, sur toute la longueur de l'axe scarificateur 2, sur la partie supérieure de l'organe de protection 21.

L'arbre s'engage à l'opposé de la machine électrique 30, dans une boîte de vitesse 32, ici un dispositif pignon-chaîne 32 définissant un rapport de réduction fixe. La boîte de vitesse 32 étant solidarisée à une autre extrémité à l'axe scarificateur 2 de sorte à l'entraîner en rotation sous l'effet de l'arbre 31.

La boîte de vitesse 32 est installée à l'opposée de la machine électrique 30 d'entraînement en rotation de l'axe scarificateur 2 de sorte à équilibrer les masses du système de scarification 10 selon la direction longitudinale de l'axe scarificateur 2.

La machine électrique 30 d'entraînement en rotation de l'axe scarificateur 2 est alimentée électriquement par une batterie d'accumulateur électriques installée dans la base mobile 300, de sorte que des câbles d'alimentation s'étendent entre la base mobile 300 et le système de scarification 10.

La carte de commande de la machine électrique 30 entraînant la rotation de l'axe scarificateur 2 est installée dans la base mobile 300.

Le système de scarification 10 comprend des moyens de repos 50, 50' aptes à permettre le repos de l'axe scarificateur 2 sur le sol, tout en maintenant les lames de scarification 20-20" à distance du sol.

Ici les moyens de repos 50, 50" sont des disques 50, 50" métalliques et rigides installés respectivement à chaque extrémité longitudinale de l'axe scarificateur 2 et au centre de l'axe scarificateur 2.

Selon une alternative de réalisation les disques 50, 50' pourraient être fait de toute autre matériau rigide adapté.

Selon une alternative, les moyens de repos peuvent êtres des butées mécaniques comprenant des roulettes à leur extrémité libre.

Selon un mode de réalisation préféré, seuls deux disques 50, 50' sont installés, respectivement à chaque extrémité de l'axe scarificateur 2.

Les disques 50,50' peuvent comprendre, selon un mode de réalisation particulier, des trous d'allégements répartis sur toute sa surface.

Les disques 50, 50' permettent, en plus de leur fonction de repos, d'assurer que les lames de scarification 20-20"' ne touchent pas le sol. A cet effet les disques 50, 50' présentent un rayon sensiblement supérieur à la longueur de portée des lames de scarification 20-20"', de sorte à ce que les lames de scarification 20-20"' ne touchent jamais le sol, afin de ne pas les endommager.

On entend par longueur de portée des lames 20-20"', la longueur maximale des lames 20-20"' auquel s'ajoute le rayon de l'axe scarificateur 2.

Toutefois la différence entre le diamètre des disques 50, 50' et la longueur des lames de scarification 20-20"' doit être suffisamment faible pour permettre une pénétration des lames 20-20"' dans la litière.

Dans ce mode de réalisation l'épaisseur de la litière est d'une grandeur comprise entre 1 et 10 cm, par exemple entre 2 et 6 cm, tel qu'une valeur de 3cm d'épaisseur de litière.

Dans ce mode de réalisation le diamètre des disques 50, 50' est supérieur d'une valeur comprise entre 1mm et 1cm, ici de sensiblement 5mm par rapport à la longueur des plus longues lames scarificatrices 20-20".

La commande en hauteur du scarificateur 10 est par conséquent nécessaire, en outre de ces disques 50, 50', pour assurer que les lames scarificatrices 20-20" ne touchent pas le sol, en particulier compte tenu des défauts de planéité du sol fréquemment rencontrés.

Les disques 50, 50' peuvent être solidaire en rotation de l'axe scarificateur 2. Toutefois dans ce mode de réalisation les disques 50, 50' sont libres en rotation par rapport à l'axe scarificateur 2. Ainsi, dans ce mode de réalisation, les disques 50, 50' tournent à la vitesse de progression de la base mobile 300 tandis que l'axe scarificateur 2 est entraîné en rotation à une vitesse supérieure, adaptée pour scarifier une litière.

L'organe de protection 21 de l'axe scarificateur 2 présente une portion supérieure en forme de portion cylindrique 22 présentant à chaque extrémité longitudinale deux parois latérales 23, 23'.

L'axe scarificateur 2 est fixé, libre à rotation, à chacune des parois latérales 23, 23'.

L'organe de protection 21 est aussi fixé à la platine de fixation 200, par une liaison pivot commandée.

La liaison pivot 24-27 comprend un axe de rotation 24 s'étendant parallèlement à l'axe scarificateur 2, le long de la partie basse de la platine de fixation 200.

Cet axe de rotation 24 permet la rotation par rapport à la platine de fixation 200, qui est elle fixe par rapport à la base mobile 300, d'un cadre amortisseur 27 et de deux bras de fixation 26, 26'.

Chaque bras de fixation 26, 26' présente une première portion 260 s'étendant depuis l'axe de rotation 24 vers l'organe de protection 21, une portion courbe 260' épousant le contour extérieur de l'organe de protection 21 et une paroi supérieure verticale 260" s'étendant depuis la partie haute de l'organe de protection.

L'organe de protection 21 est ainsi fixé aux deux bras de fixation 26, 26' chacun étant libre en rotation par rapport à l'axe de rotation 24.

Chaque paroi supérieure verticale 260" des bras de fixation 26, 26' est fixée à une paroi de protection supérieure 261 sur laquelle est fixé un pignon, non représenté.

Dans ce mode de réalisation le pignon est fixé à la paroi de protection supérieure 261 par deux écrous.

Ce pignon est installé de sorte à coopérer avec une vis sans fin 262, installée dans un manchon de protection 263.

La vis sans fin 262 est quant à elle montée sur une machine électrique 264 adaptée pour commander la rotation de la vis sans fin 262.

La machine électrique est montée libre en rotation sur un autre axe de rotation 265 parallèle à l'axe scarificateur 2, fixé en partie haute du cadre amortisseur 27.

La vis sans fin 262 est installée sur la machine électrique 264 de sorte à s'étendre selon la direction normale du plan principal du cadre amortisseur 27, et coopérant avec le pignon fixe installé en regard de la paroi de protection supérieure 261.

Ainsi, lorsque la vis sans fin 262 est commandée en rotation par la machine électrique 264, la coopération avec le pignon produit un éloignement ou un rapprochement de l'organe de protection 21 le long de la vis sans fin 262.

De par la fixation via les bras de fixation 26, 26' de l'organe de protection 21 libres en rotation autour de l'axe de rotation 24 inférieur, l'actionnement du pignon par la vis sans fin 262 produit une modification de l'angle de l'organe de protection 21, et par conséquent de la hauteur de l'axe de scarification 2.

Ainsi, en actionnant la vis sans fin 262, on peut produire une rotation de l'axe scarificateur 2 autour de l'axe de rotation 24, et commander par conséquent la hauteur de l'axe scarificateur 2.

L'ensemble machine électrique 264, vis sans fin 263 et pignon forme un dispositif de contrôle 40 de l'angle, et de la hauteur, de l'axe scarificateur 2.

Une carte électronique de commande de la machine électrique 264 de commande de la vis sans fin 262 est installée dans la base mobile 300, et des moyens de communication entre la machine électrique 264 et la carte électrique de commande, par exemple des câbles de connexion, s'étendent entre la base mobile 300 et l'ensemble scarificateur 10.

En outre les moyens d'alimentation de la machine électrique 264 de commande de la vis sans fin 262 sont aussi installés dans la base mobile, et les câbles d'alimentation s'étendent par conséquent depuis la base mobile vers l'ensemble scarificateur 10. Toutefois il pourrait être prévu une alimentation électrique directement installée sur l'ensemble scarificateur 10.

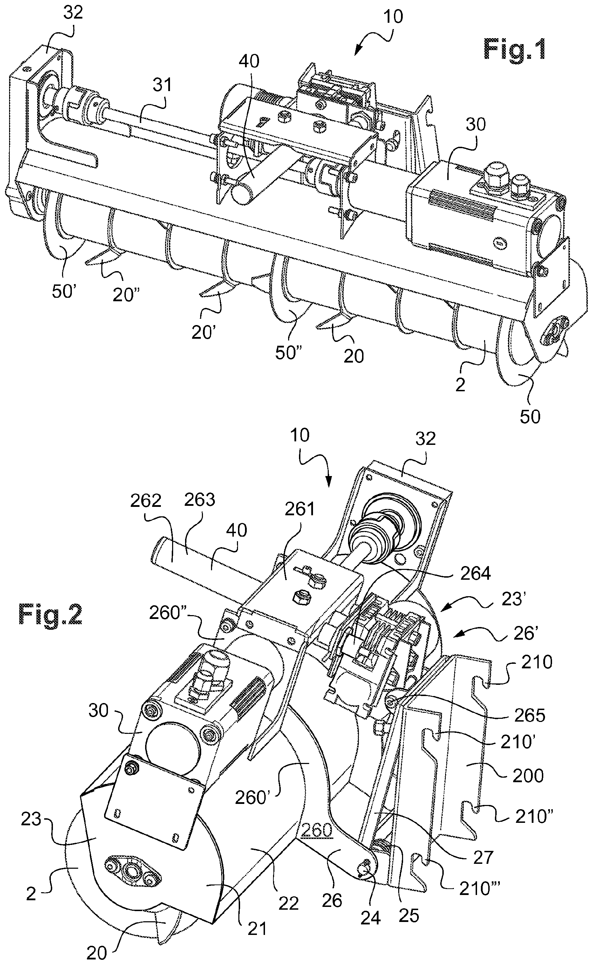

Le cadre amortisseur 27, représenté en figure 2 dans une position contrainte, est monté à rotation, via l'axe de rotation 24, à la platine de fixation 200.

Le cadre amortisseur 27 est maintenu dans une position de repos, sensiblement parallèle à la platine de fixation 200.

Un absorbeur de choc est installé sur le cadre amortisseur 27 pour permettre la dissipation des vibrations mécaniques liées à la rotation des lames scarificatrices 20-20" dans la litière.

Une ressort hélicoïdal 25 est installé autour de l'axe de rotation 24 de sorte que lorsqu'une contrainte tend à ramener la partie supérieure du cadre amortisseur au contact de la platine de fixation, tel que représenté figure 2, le ressort soit contraint et tende à ramener le cadre amortisseur 27 à sa position de repos, sensiblement parallèle à la platine de fixation 200.

Puisque le dispositif de contrôle 40 est solidaire du cadre amortisseur 27, un effort de l'axe rotatif 2 tendant à remonter, sera amorti par le cadre amortisseur 27, et permettra un changement transitoire de l'inclinaison et de la hauteur de l'axe rotatif 2. Ainsi le cadre amortisseur 27 permet de compenser les faibles variations du terrain, en particulier en cas de défaillance du procédé décrit ci-après.

La modification de l'inclinaison résultant de l'actionnement de la vis sans fin 262 permet de relever ou abaisser l'axe scarificateur 2 par rapport au niveau du sol, et à faire varier le niveau de pénétration des lames scarificatrices 20-20" dans la litière.

L'ensemble de scarification 1 comprend à cet effet des moyens de commande non représentés, embarqué dans la base mobile 300.

La base mobile 300 comprend des moyens de mesure de l'assiette longitudinale et du roulis, par exemple un gyroscope et un accéléromètre, de sorte à connaître l'assiette instantanée de la base mobile 10.

On entend par assiette α, w de la base mobile 10 son inclinaison longitudinale α ainsi que son roulis ω.

De par le fait que le système de scarification 10 est solidaire de la base mobile 300, une modification de l'assiette α, w de la base mobile 300 se répercutera sur l'axe scarificateur 2. Par conséquent la détection d'une modification de l'assiette, selon son amplitude, peut nécessiter le relevage de l'axe de scarification de sorte à protéger les lames d'une contact involontaire avec le sol.

Le gyroscope peut être pris en combinaison ou substitué par un gyromètre, dont les fonctions seront dans la présente description considérées comme identiques.

La base mobile 300 comprend aussi des moyens de mesure de l'angle de progression θ de la base mobile 300. L'angle de progression θ correspondant à la variation de progression de la base mobile 300 par rapport à une progression longitudinale. Autrement dit l'angle de progression θ correspond à l'angle en virage de la base mobile 300, par rapport à l'axe principal de progression X.

L'ensemble de scarification 1 comprend aussi des moyens d'estimation de son autonomie énergétique. Ainsi, la base mobile 300 est apte à connaître la charge de ses batteries électriques, et avantageusement leur durée de fonctionnement restante estimée, par exemple par une mesure complémentaire du courant consommé.

L'ensemble de scarification 1 comprend des moyens pour mesurer le couple résistif appliqué sur la machine électrique 264 entraînant en rotation la vis sans fin 262. Ainsi, lorsque la machine électrique 264 est commandée de sorte à entraîner la vis sans fin dans un sens permettant l'abaissement de l'axe rotatif 2, et lorsque les disques 50, 50' atteignent le sol, le couple résistif sur la machine électrique 264 augmente significativement et les moyens de commande de l'ensemble de scarification détectent que la position la plus basse est atteinte.

L'ensemble de scarification 1 comprend aussi des moyens de mesure de la force résistante du substrat sur les lames de scarification 20-20", par exemple une mesure du couple résistif sur la machine électrique 30 d'entraînement en rotation de l'axe scarificateur 2.

Les moyens de commande de l'ensemble de scarification 1 mettent en œuvre un procédé de commande 400 comprenant une étape préalable d'initialisation 401 dans laquelle le scarificateur 10 est remonté dans sa position la plus haute.

Cette étape préalable d'initialisation 401 peut aussi être réalisée lors de la fin du fonctionnement lors d'une utilisation précédente, de sorte qu'à chaque fin d'utilisation le scarificateur 10 est remis dans une position initialisée.

Le procédé est étalonné de sorte que la hauteur de l'axe scarificateur 2 est connue en fonction de la position du pignon le long de la vis sans fin. Ce calcul d'étalonnage est aisément réalisé par un calcul trigonométrique tenant compte de la position de l'axe de rotation 24 par rapport à l'axe scarificateur 2 et au point de coopération pignon/vis sans fin 262.

Ainsi, les moyens de commande procèdent à une conversion automatique entre le taux d'abaissement du scarificateur 10 et la position du pignon le long de la vis sans fin 262.

Dans la présente description on se référera à un pourcentage d'abaissement du scarificateur 10, pour lequel 0% correspond à la position totalement relevée, et 100% à la position dans laquelle les disques 50, 50' reposent sur le sol. Ainsi, lorsqu'on emploie le terme réduction du taux d'abaissement T%, on décrit le relevage de l'axe scarificateur 2.

Dans une première étape on détecte la mise en route de l'ensemble de scarification 402.

Ensuite en met en œuvre un ensemble d'étapes de mesures, dont l'ordre peut varier, au cours desquelles on reçoit une pluralité de mesures pour calculer le taux d'abaissement T% du scarificateur 10.

On procède notamment à la réception d'une mesure de charge électrique de la base mobile 300.

Cette étape de réception de charge électrique, comprend aussi dans ce mode de réalisation la réception d'une valeur de courant i consommé par l'ensemble de scarification 1 de sorte à estimer le temps de fonctionnement restant disponible.

On procède ensuite à la réception 403 de valeurs représentatives de l'assiette α, w et de l'angle de progression θ de la base mobile 300.

Selon un mode de réalisation particulier, on mesure aussi la force résistive fr appliquée par la litière sur les lames scarificatrices 20-20".

Le taux d'abaissement T% du scarificateur 10 est alors calculé en fonction de la mesure de charge des batteries, de l'assiette α, w de la base mobile et de son angle de progression θ.

Selon un mode de réalisation particulier, on peut aussi tenir compte de la résistance appliquée par la litière sur les lames scarificatrices 20-20".

Le calcul 404 du taux d'abaissement T% est alors effectué en fonction des mesures obtenues.

Dans un fonctionnement rectiligne, sans variation du terrain et à charge électrique élevée, un taux standard d'abaissement est défini, par exemple un taux de 100%, mais le taux standard peut être adapté en fonction de la litière et du plus ou moins grand besoin de retourner et d'aérer cette litière. Autrement dit, dans des conditions idéales, la scarification est réglée à un taux standard, ici de 100%, soit un abaissement complet du scarificateur.

Le calcul 404 du taux d'abaissement T% est conformé pour tenir compte des mesures réalisées afin d'adapter le taux standard aux conditions d'utilisation instantanées.

En particulier, le taux d'abaissement T% est réduit lorsque la charge électrique disponible est faible. Ainsi, on limite la pénétration de scarificateur dans la litière, de sorte à augmenter le temps de fonctionnement de la base mobile 300.

Ainsi, lorsqu'un seuil inférieur de charge électrique est atteint, le taux d'abaissement T% est limité, par exemple à une valeur comprise entre 50% et 90%, ou pour une plus importante économie d'énergie entre 10% et 70%.

Lorsque la batterie est faiblement chargée, on souhaite remonter sensiblement le scarificateur 10 par rapport au taux standard, de sorte à limiter la force résistive appliquée sur les lames scarificatrices par la litière.

Cette diminution du taux d'abaissement T% en fonctionnement à faible charge électrique pouvant être proportionnel à la valeur de la charge, autrement dit plus la charge électrique disponible est faible, plus le scarificateur 10 est relevé.

Cet asservissement en diminution du taux d'abaissement T% peut, selon un mode de réalisation particulier, tenir compte de la force résistive appliquée sur les lames scarificatrices 20-20" par la litière mesurée, de sorte à optimiser la consommation électrique du scarificateur.

Lorsqu'une modification de l'assiette de la base mobile 300 est détectée, on procède aussi à une remontée du scarificateur 10, de sorte à protéger les lames scarificatrices 20-20" d'un contact involontaire avec le sol. Par conséquent l'évolution du taux d'abaissement T% sera fonction de la valeur des angles mesurés α, ω pour l'assiette α, ω de la base mobile 300. Par exemple, dans le cas d'une très importante variation d'assiette on peut prévoir une remontée totale du scarificateur, soit T% à 0, mais on peut aussi prévoir des variations plus douces pour des modifications d'assiettes moins importantes. L'objectif étant toutefois d'adapter en permanence le taux d'abaissement T% au mouvement de l'assiette de la base mobile 300.

Dans une mise en œuvre particulière, lorsque la base mobile tourne de manière importante, autrement dit lorsque son angle de progression θ varie fortement, par exemple lors d'un demi-tour, on peut procéder au relevage provisoire du scarificateur 10 jusqu'à la fin de la manœuvre, par exemple avec un taux T% à 0, soit un relevage total.

Dans ce mode de réalisation, pour déterminer la variation de l'assiette et du roulis de la base mobile 300, on calcule la dérivée des angles d'assiette mesurés α, ω de sorte à calculer l'évolution de la position de la base mobile 300 sur le sol. Toutefois un mode alternatif peut pendre en compte les valeurs telles que mesurées.

En fonction de ces mesures et critères, on calcule 404 le taux d'abaissement T% du scarificateur 10.

On commande 405 ensuite l'abaissement, ou le relevage, du scarificateur 10 jusqu'au taux calculé.

Cette commande 405 d'abaissement ou de relevage et réalisée par un asservissement, par exemple une régulation en boucle fermée du type Proportionnel intégral dérivé (PID).

L'asservissement est réalisé jusqu'à atteindre le taux calculé T%.

Toutefois cet asservissement peut être interrompu par la réception de nouvelles mesures, réalisées en continu, indiquant un changement des paramètres et donc la nécessité d'un nouveau calcul du taux d'abaissement T%, par exemple parce qu'un obstacle modifie soudainement l'assiette de la base mobile 300.

Lorsque la base mobile 300 évolue à faible vitesse, en particulier par rapport à la vitesse d'asservissement en hauteur du scarificateur, ce qui est généralement le cas dans un élevage avicole, on peut maintenir l'asservissement jusqu'à atteindre le taux calculé T% sans interrompre l'asservissement pour tenir compte instantanément d'un changement des paramètres mesurés.

Cependant, on mesure en parallèle le couple résistif appliqué sur la machine électrique 264 entraînant en rotation la vis sans fin 262, ou tout autre valeur permettant de détecter que les disques 50, 50' on atteint le sol.

En effet, si les disques 50, 50' touchent le sol, l'abaissement du scarificateur doit être interdit ; cette détection constitue donc un critère d'arrêt à l'asservissement et la fin de la descente 408.

Les étapes de mesures 403, de calcul 404 du taux d'abaissement T% et de commande de la descente 405 sont répétées en boucle jusqu'à détection de la fin d'utilisation 409 de l'ensemble de scarification 1.

Ainsi, on peut asservir, de manière automatique, l'inclinaison et la hauteur du scarificateur 10 de sorte à permettre une bonne scarification des litières de l'enclos, tout en optimisant la consommation électrique, en évitant le risque de contact entre les lames scarificatrices 20-20" et le sol.

Selon un autre mode de réalisation, le procédé est en outre conformé pour adapter la vitesse de rotation de l'axe scarificateur 2 en fonction de la charge électrique disponible ainsi que du couple résistif appliqué par la litière sur la machine électrique 30 d'entraînement de l'axe scarificateur 2.

## Revendications

1. Ensemble mobile (1) pour aérer une litière recouvrant le sol d'un enclos, comprenant une base mobile (300) motorisée apte à parcourir de manière autonome ledit enclos et un système de scarification (10) traîné par ladite base mobile (300) comprenant un axe scarificateur (2) sur lequel sont installées des lames de scarification (20-20"), ledit axe scarificateur (2) étant entraîné en rotation par des moyens d'entraînement motorisé (30-32), le système de scarification (10) étant installé mobile en rotation par rapport à la base mobile (300), l'ensemble mobile (1) comprenant :
- des moyens de mesure de la charge énergétique disponible pour l'ensemble mobile (1);
**caractérisé par**:
- des moyens de mesure de l'assiette (α, ω) de la base mobile (300); et
- un dispositif de contrôle (40) du système de scarification (10) apte à modifier la hauteur de l'axe scarificateur (2) par rapport à la base mobile (300), de sorte à adapter la profondeur de pénétration des lames de scarification (10) dans ladite litière en fonction d'au moins la charge énergétique disponible et de l'assiette (α, ω) mesurée de la base mobile (300).

2. Ensemble mobile (1) selon la revendication 1, **caractérisé en ce que** le système de scarification (10) comprend des moyens de repos (50, 50') conformés pour maintenir les lames de scarification (10) à distance du sol tout en permettant leur pénétration dans la litière.

3. Ensemble mobile (1) selon la revendication 2, **caractérisé en ce que** les moyens de repos (50, 50') comprennent deux disques (50, 50") installés chacun à une extrémité longitudinale de l'axe scarificateur (2) et présentant un rayon sensiblement supérieur à la longueur de portée des lames de scarification (20) installées sur l'axe scarificateur (2).

4. Ensemble mobile (1) selon l'une quelconque des revendications 1 à 3, **caractérisé en ce que** l'axe scarificateur (2) est monté à rotation sous un organe de protection (21), ledit organe de protection étant fixé à une platine support (200) par un axe de rotation (24) d'une part et par ledit dispositif de contrôle (40) d'autre part.

5. Ensemble mobile (1) selon la revendication 4, **caractérisé en ce que** le dispositif de contrôle (40) comprend une machine électrique (264) montée à rotation sur ladite platine support (200), une vis sans fin (262) étant montée sur la machine électrique (264) de sorte à être entraîné en rotation par la machine électrique (264), ladite vis sans fin (262) coopérant avec un pignon fixe solidaire de l'organe de protection (21).

6. Procédé de commande (400) d'un ensemble mobile (1) selon l'une quelconque des revendications 1 à 5 **caractérisé en ce qu'**il comprend :
- une étape de mesure (403) de la charge énergétique disponible de l'ensemble mobile (1) et de l'assiette (α, ω) de la base mobile (300) ;
- une étape de calcul (404) d'un taux d'abaissement (T%) du système de scarification (10) en fonction d'au moins lesdites mesures de charge énergétique disponible de la base mobile (300) et de l'assiette (α, ω) de la base mobile (300) ;
- et une étape de commande (405) du dispositif de contrôle (40) adaptée pour modifier la hauteur de l'axe scarificateur (2) par rapport à la base mobile (300) jusqu'à atteindre le taux d'abaissement (T%) calculé, de sorte à adapter la profondeur de pénétration des lames de scarification (10) dans ladite litière.

7. Procédé de commande selon la revendication 6, **caractérisé en ce que** l'étape de calcul (404) comprend le calcul d'un taux d'abaissement (T%) du système de scarification (10) en fonction d'un taux standard d'abaissement prédéterminé.

8. Procédé de commande selon la revendication 7, **caractérisé en ce que** l'étape de calcul (404) comprend la réduction du taux standard d'abaissement de sorte à relever l'axe de scarification (2) si la charge énergétique disponible l'ensemble mobile (1) mesurée est inférieure à une valeur de seuil inférieur.

9. Procédé de commande selon la revendication 7 ou 8, **caractérisé en ce que** l'étape de calcul (404) comprend la réduction du taux standard d'abaissement de sorte à relever l'axe de scarification (2) lorsque l'assiette (α, ω) de la base mobile (300) change.

10. Procédé de commande selon l'une quelconque des revendications 7 à 9, **caractérisé en ce que** l'étape de calcul (404) comprend la réduction du taux standard d'abaissement lorsqu'un angle de progression (θ) de la base mobile (300) indiquant un virage de la base mobile (300) est mesuré.

## Patentansprüche

1. Bewegliche Anordnung (1) zur Belüftung einer den Boden eines Geheges bedeckenden Streu, umfassend eine motorisierte bewegliche Basis (300), die geeignet ist, das Gehege autonom zu durchlaufen, und ein von der beweglichen Basis (300) gezogenes Grubbersystem (10), das eine Grubberwelle (2) umfasst, auf der Grubberzinken (20 bis 20") eingerichtet sind, wobei die Grubberwelle (2) von motorisierten Antriebsmitteln (30 bis 32) drehbar angetrieben wird, wobei das Grubbersystem (10) in Bezug auf die bewegliche Basis (300) drehbeweglich eingerichtet ist, wobei die bewegliche Anordnung (1) umfasst:
- Mittel zur Messung der für die bewegliche Anordnung (1) verfügbaren Energielast;
**gekennzeichnet durch**:
- Mittel zur Messung der Lage (α, ω) der beweglichen Basis (300); und
- eine Vorrichtung (40) zur Steuerung bzw. Regelung des Grubbersystems (10), die geeignet ist, die Höhe der Grubberwelle (2) in Bezug auf die bewegliche Basis (300) derart zu ändern, dass die Eindringtiefe der Grubberzinken (10) in die Streu in Abhängigkeit von mindestens der verfügbaren Energielast und der gemessenen Lage (α, ω) der beweglichen Basis (300) angepasst wird.

2. Bewegliche Anordnung (1) nach Anspruch 1, **dadurch gekennzeichnet, dass** das Grubbersystem (10) Auflagermittel (50, 50') umfasst, die so angepasst sind, dass sie die Grubberzinken (10) im Abstand vom Boden halten und dabei ihr Eindringen in die Streu ermöglichen.

3. Bewegliche Anordnung (1) nach Anspruch 2, **dadurch gekennzeichnet, dass** die Auflagermittel (50, 50') zwei Scheiben (50, 50") umfassen, die jeweils an einem Längsende der Grubberwelle (2) eingerichtet sind und einen Radius aufweisen, der im Wesentlichen größer als die Länge des Aktionsradius der an der Grubberwelle (2) eingerichteten Grubberzinken (20) ist.

4. Bewegliche Anordnung (1) nach einem der Ansprüche 1 bis 3, **dadurch gekennzeichnet, dass** die Grubberwelle (2) unter einem Schutzorgan (21) drehbar gelagert ist, wobei das Schutzorgan mittels einer Drehwelle (24) einerseits und mittels der Steuer- bzw. Regelvorrichtung (40) andererseits an einer Tragplatte (200) befestigt ist.

5. Bewegliche Anordnung (1) nach Anspruch 4, **dadurch gekennzeichnet, dass** die Steuer- bzw. Regelvorrichtung (40) eine elektrische Maschine (264), die an der Tragplatte (200) drehbar gelagert ist, und eine Schnecke (262) umfasst, die derart an der elektrischen Maschine (264) gelagert ist, dass sie von der elektrischen Maschine (264) drehbar angetrieben wird, wobei die Schnecke (262) mit einem Ritzel zusammenwirkt, das fest mit dem Schutzorgan (21) verbunden ist.

6. Verfahren zur Steuerung bzw. Regelung (400) einer beweglichen Anordnung (1) nach einem der Ansprüche 1 bis 5, **dadurch gekennzeichnet, dass** es umfasst:
- einen Schritt des Messens (403) der verfügbaren Energielast der beweglichen Anordnung (1) und der Lage (α, ω) der beweglichen Basis (300);
- einen Schritt des Berechnens (404) eines Absenkungsprozentsatzes (T%) des Grubbersystems (10) in Abhängigkeit von mindestens den Messungen der verfügbaren Energielast der beweglichen Basis (300) und der Lage (α, ω) der beweglichen Basis (300);
- und einen Schritt des Steuerns bzw. Regelns (405) der Steuer- bzw. Regelvorrichtung (40), der so angepasst ist, dass er die Höhe der Grubberwelle (2) in Bezug auf die bewegliche Basis (300) ändert, bis sie den berechneten Absenkungsprozentsatz (T%) erreicht, derart dass die Eindringtiefe der Grubberzinken (10) in die Streu angepasst wird.

7. Steuer- bzw. Regelverfahren nach Anspruch 6, **dadurch gekennzeichnet, dass** der Schritt des Berechnens (404) das Berechnen eines Absenkungprozentsatzes (T%) des Grubbersystems (10) in Abhängigkeit von einem vorbestimmten Standardabsenkungsprozentsatz umfasst.

8. Steuer- bzw. Regelverfahren nach Anspruch 7, **dadurch gekennzeichnet, dass** der Schritt des Berechnens (404) die Verminderung des Standardabsenkungsprozentsatzes umfasst, derart dass die Grubberwelle (2) angehoben wird, wenn die gemessene verfügbare Energielast der beweglichen Anordnung (1) niedriger als ein unterer Schwellenwert ist.

9. Steuer- bzw. Regelverfahren nach Anspruch 7 oder 8, **dadurch gekennzeichnet, dass** der Schritt des Berechnens (404) die Verminderung des Standardabsenkungsprozentsatzes umfasst, derart dass die Grubberwelle (2) angehoben wird, wenn die Lage (α, ω) der beweglichen Basis (300) sich ändert.

10. Steuer- bzw. Regelverfahren nach einem der Ansprüche 7 bis 9, **dadurch gekennzeichnet, dass** der Schritt des Berechnens (404) die Verminderung des Standardabsenkungsprozentsatzes umfasst, wenn ein Fortbewegungswinkel θ der beweglichen Basis (300) gemessen wird, der auf ein Schwenken der beweglichen Basis (300) hindeutet.

## Claims

1. Movable assembly (1) for aerating a litter covering the ground of an enclosure, comprising a motorised movable base (300) capable of travelling autonomously across said enclosure and a scarifying system (10) towed by said movable base (300) comprising a scarifying shaft (2) on which scarifying blades (20-20'') are installed, said scarifying shaft (2) being rotated by motorised drive means (30-32), the scarifying system (10) being installed movable in rotation relative to the movable base (300), the movable assembly (1) comprising:
- means for measuring the available energy load for the movable assembly (1);
**characterised by**:
- means for measuring the attitude (α, ω) of the movable base (300); and
- a device (40) for controlling the scarifying system (10) capable of modifying the height of the scarifying shaft (2) relative to the movable base (300), so as to adapt the penetration depth of the scarifying blades (10) in said litter based on at least the measured available energy load and the measured attitude (α, ω) of the movable base (300).

2. Movable assembly (1) according to claim 1, **characterised in that** the scarifying system (1) comprises rest means (50, 50') shaped to hold the scarifying blades (10) at a distance from the ground while enabling the penetration thereof in the litter.

3. Movable assembly (1) according to claim 2, **characterised in that** the rest means (50, 50') comprise two disks (50, 50") each installed at a longitudinal end of the scarifying shaft (2) and having a radius substantially greater than the span length of the scarifying blades (20) installed on the scarifying shaft (2).

4. Movable assembly (1) according to any one of claims 1 to 3, **characterised in that** the scarifying shaft (2) is rotatably mounted under a protective member (21), said protective member being fastened to a support plate (200) by a rotary shaft (24), on one hand, and by said control device (40), on the other.

5. Movable assembly (1) according to claim 4, **characterised in that** the control device (40) comprises an electric machine (264) rotatably mounted on said support plate (200), a worm screw (262) being mounted on the electric machine (264) so as to be rotated by the electric machine (264), said worm screw (262) cooperating with a fixed pinion rigidly connected to the protective member (21).

6. Control method (400) of a movable assembly (1) according to any one of claims 1 to 5 **characterised in that** it comprises:
- a step (403) of measuring the available energy load for the movable assembly (1) and the attitude (a, ω) of the movable base (300);
- a step (404) of calculating a lowering rate (T%) of the scarifying system (10) based on at least said available energy load measurements of the movable base (300) and the attitude (α, ω) of the movable base (300) ;
- and a step (405) of controlling the control device (40) adapted to modify the height of the scarifying shaft (2) relative to the movable base (300) until the calculated lowering rate (T%) has been reached, so as to adapt the penetration depth of the scarifying blades (10) in said litter.

7. Control method according to claim 6, **characterised in that** the calculation step (404) comprises calculating a lowering rate (T%) of the scarifying system (10) based on a predetermined standard lowering rate.

8. Control method according to claim 7, **characterised in that** the calculation step (404) comprises reducing the standard lowering rate so as to lift the scarifying shaft (2) if the available energy load for the movable assembly (1) measured is less than a lower threshold value.

9. Control method according to claim 7 or 8, **characterised in that** the calculation step (404) comprises reducing the standard lowering rate so as to lift the scarifying shaft (2) when the attitude (α, ω) of the movable base (300) changes.

10. Control method according to any one of claims 7 to 9, **characterised in that** the calculation step (404) comprises reducing the standard lowering rate when a progression angle (θ) of the movable base (300) indicating a turn of the movable base (300) is measured.
